# EUROPEAN PATENT APPLICATION

(11) **EP 4 321 946 A1**
(43) Date of publication of application: **14.02.2024**
(21) Application number: 22189658.2
(22) Date of filing: 10.08.2022
(51) Int. Cl.: G05B 17/02, G05B 19/4069

(54) **PARAMETERIZATION OF A DIGITAL TWIN AND/OR AN AUTOMATION SYSTEM**

(71) Applicant: Siemens Aktiengesellschaft, 80333 München (DE)
(72) Inventor: Bretschneider, Jochen, 88696 Owingen (DE)
(74) Representative: Siemens Patent Attorneys

(57) **Abstract**

A method of providing output data (1), preferably in an output file, for parameterizing a digital twin (DT) of an automation system (MT), preferably a machine tool, the automation system (MT) comprising a plurality of automation components (11-18),
wherein the digital twin (DT) is a digital representation of the automation system (MT), the method comprising the steps of:
determining, by an automation component (17) from the plurality of automation components (11-18), parameter data (2) from the plurality of automation components (11-18), wherein the parameter data (2) serve for parameterizing the digital twin (DT) of the automation system (MT),
creating, by the automation component (17), output data (1) based on the parameter data (2), wherein the output data (1) is loadable by the digital twin (DT) of the automation system (MT) .

## Description

### TECHNICAL FIELD

The present disclosure relates to the field of automation system, preferably industrial automation systems such as machine tools. Furthermore, the present disclosure relates to the virtualization of such automation systems, i.e., digital twins and the parameterization of the digital twin and/or the automation system.

### BACKGROUND

The digital twin simulates and optimizes all areas of the value-added chain: Product, production and performance. This is the next step in the digital transformation for machine builders and users - allowing them to reach the next level of productivity. This means that central processes in the production landscape (such as programming, production planning and process optimization) are always simulated using the digital twin, which provides a detailed virtual image of the control system and/or machining process. The digital twin plays a decisive role when it comes to optimizing the widest range of processes while the machine is operational. Using the digital twin, a range of tasks can be shifted from the real world into the virtual world. For example, the digital twin for machining, optimizes the utilization of machine tools. Unproductive machine periods are reduced to a minimum and consequentially shifted into production planning.

Programming and setting up operations are virtually shifted from the real production environment into a virtual environment. For example, a machine tool does not have to be at a standstill to identify whether components can be actually machined. CNC (Computer Numerical Control) programs can be tested in advance for potential collision of the tool with clamping equipment or machine parts. CNC programs for new production orders can be run-in "off-line" as long as the machine tool is still in productive operation. Further, new operating personal can be trained without blocking the machine. Unproductive times at the machine tool are therefore reduced to a minimum and consequentially shifted into production planning. This boosts the productivity and availability of the machine tool.

### SUMMARY

The present disclosure relates to the problem that the digital twin, DT, of an automation system, such as CNC-controlled machine tool, comprising mechanical transmission elements, motors, drives, a CNC control, a PLC (programmable logic controller) control and a gateway, such as Sinumerik Edge, must be parameterized by the user in a time-consuming manner. The necessity of a parameterization persists both at the time of an initial creation of the DT, which is usually carried out by the OEM (Original Equipment Manufacturer), and at the time of the application at the end customer, in particular if a change of the automation system occurs due to re-parameterization, conversion, maintenance, repair and replacement of components or wear, for example, of the mechanical transmission elements. While the automation system builder as an OEM usually knows exactly how the parameterization has to be done and has easy access to the parameters, the challenge for the end customer is much greater.

It is thus an object of the present disclosure to enable an accurate parameterization of a digital twin and/or an automation system.

The object tis achieved by the subject-matter of the independent claims. Further advantageous embodiments are described in the dependent claims.

The present disclosure proposes a solution for parameterization of a DT and/or an automation system. To that end, an automatic generation of the parameter data necessary for the simulation of an automation system, machine or plant, e.g., at the request of the user, is proposed. This may be achieved in a user-friendly manner by actuating a single (virtual) button on the automation component of the automation system. In response to the push of a button on an automation component of the automation system, parameter data, e.g., a fingerprint, of the automation system may be recorded in electronic form, e.g., in a file. This file, in turn, may be directly loaded into the DT of the automation component.

### BRIEF DESCRIPTION OF THE DRAWINGS

- Figure 1: shows an illustration of a machine tool and a corresponding digital twin.
- Figure 2: shows a plurality of automation components of a machine tool.
- Figure 3: shows a transmission of parameter data from a machine tool to a digital twin.
- Figure 4: shows parameter data comprising settings and a data backup, respectively.
- Figure 5: shows a control display of a machine tool comprising a control element for creating output data.
- Figure 6: to 17 show further exemplary embodiments.

### DETAILED DESCRIPTION

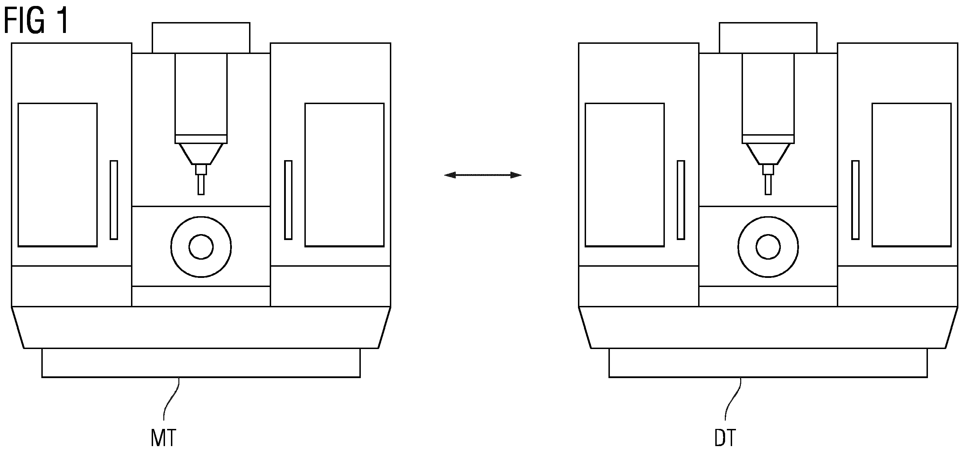

As an example of an automation system comprising a plurality of automation components 11-18, in hardware and/or software, a machine tool MT is shown in Figure 1.

A machine tool MT is a machine for handling or machining a workpiece made of metal or other rigid materials, usually by cutting, boring, grinding, shearing, or other forms of deformations. A machine tool MT may employ a cutting tool that does the cutting or shaping. The machine tool MT may have some means of constraining the workpiece and provide a guided movement of the parts of the machine tool MT. Thus, the relative movement between the workpiece and the cutting tool (which is called the toolpath) is controlled or constrained by the machine tool MT to at least some extent.

Nowadays an automated control of a machine tool MT by means of a computer, so-called CNC (machine tool), is employed. To that end, coded programmed instructions (without a manual operator directly controlling the machining operation) are processed by the machine tool. Having the correct speeds and feeds in the program provides for a more efficient and smoother processing. Incorrect speeds and feeds will cause damage to the tool, machine spindle, and even the workpiece.

A digital twin DT is a virtual automation system that simulates an automation system, e.g., on a PC or other computing platform. The hardware and/or software components of the automation system are modeled in software, and may represent a complete image of a real automation system. With the digital twin DT, it is possible to develop and test the automation system, e.g., comprising a plurality of automation components such as a CNC machine, or NCK, PLC and HMI software, without requiring any hardware. Parts of the machine tool MT commissioning may be preconfigured on the digital twin DT. Thereby it is possible to significantly shorten the commissioning time of the real automation system by configuring the automation system using the digital twin.

For example, the digital twin can comprise a simulation of the NCK, Numerical Control Kernel, the PLC, the HMI, the drive component, motor(s) and/or spindle(s). Furthermore, the digital twin DT may comprise a simulation of the periphery of these components. The peripheral simulation for the simulation of the peripherals, such as actuators or sensors, may also be part of the digital twin DT. The peripheral simulation may allow writing PLC variables in the input image of the PLC and/or reading PLC variables in the input image of the PLC.

The digital twin DT allows the use of different machine tool configurations, e.g., turning machine (with/without Safety Integrated), or milling machine (with/without Safety Integrated). The parameter data of different configurations may be created, configured, and/or saved. For example, it is possible to configure a PLC and all the associated modules using the digital twin, program the user logic of the PLC, and then load the hardware configuration and the PLC program into the digital twin. The program logic may then be executed by the digital twin, which allows monitoring of the responses/ effects of the simulated inputs and outputs and adaption of the program logic. A virtual PLC, i.e., a digital twin, may not be able to fully simulate a real PLC. There can be differences in the behavior of a virtual PLC compared with a real PLC. It is thus necessary to have an up-to-date parameterization of the digital twin.

The digital twin DT may be executed on a computing platform such as a PC or a cloud platform. The digital twin DT may be run on a PC with Windows operating system. From there the scan cycle time and the exact time of actions are not the same as if these actions would be performed on physical hardware. This is because on the PC several programs share processing resources.

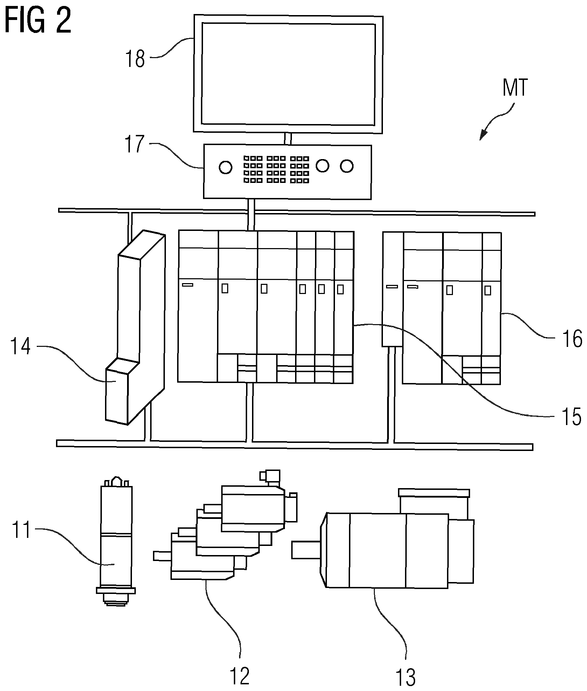

Figure 2 shows a plurality of automation components 11-18 of a machine tool. The automation components 11-18 may comprise a hardware, e.g., a processor, and a software, e.g., a control program being executed by said processor in order to control the functioning of the automation component 11-18 and/or the automation system MT. For example, the PLC 16 may comprise a first program that controls the exchange of signals and data between the PLC 16 and the NC 17, HMI 18, and machine control panel components. The PLC 17 may comprise a second program which is machine-specific and/or application specific by which the first PLC basic program is extended.

Similarly, a drive component 15 of the automation system MT and the software of those components 11-18 may be configured. For example, an encoder of a drive component 15 may be selected and parameterized. Furthermore, alarm settings, e.g., relating to a temperature of the drive component 18 may be set.

The automation components 11-18 may interact in order to control the automation system MT. For example, the PLC may interact with the CNC in order to (cyclically) transfer axis and/or spindle 11 signals. These signals may influence the CNC inputs and/or output. The CNC may then in turn transfer signals representing the actual values or setpoints for controlling an axis or spindle 11.

Furthermore, the automation system MT or automation component 11-18 may comprise a measuring system for monitoring one or more hardware components of the automation system MT or automation component 11-18. The measuring system may serve for monitoring of hardware faults, e.g., measuring system failure, wire breakage. Measuring system monitoring functions carried out in the drive component 15 may be mapped on an CNC alarm or CNC reaction, e.g., abort of referencing or on-the-fly measuring.

For example Siemens offers automation systems MT such as the so called SINUMERIK NCU which comprises the following integrated subcomponents: PLC, NCK, CP, HMI (SINUMERIK Operate), SINAMICS Integrated (DRIVE). The operation of the Siemens NCU may be simulated in a virtual environment, e.g., using the so called Create MyVirtual Machine software also offered by Siemens.

A topology of the automation components 11-18 of a CNC-controlled machine tool MT with the automation components 11-18 to be taken into account for the parametrization of a DT is shown in Figure 2. Now, in order to parameterize the DT of a machine tool MT, a user has to retrieve a large number of different parameter data from the machine tool MT or initiate, carry out and document measurements.

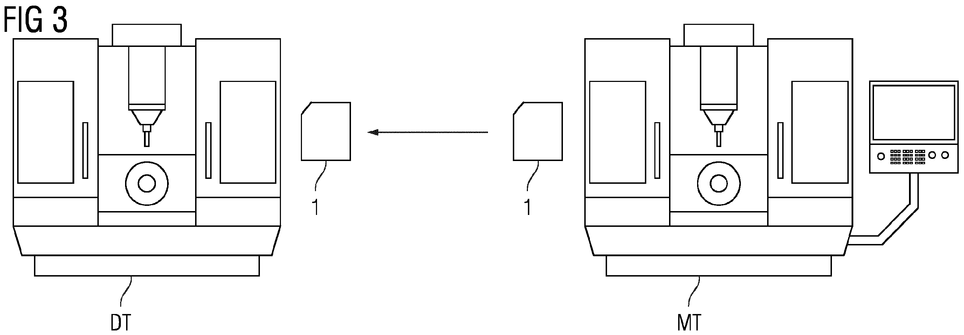

Figure 3 shows a transmission of output data 1 (comprising parameter data 2) from a machine tool MT to a digital twin DT.

Adaptation of the control at the automation system MT, e.g., the machine tool, may be performed using so called the machine data and setting data. The machine data (MD) may comprise the following data: general machine data, channel-specific machine data, axis-specific machine data, parameters for the Control Unit, parameter for the infeed, drive parameters. The setting data (SD) may comprise the following data: general setting data, channel-specific setting data, axis-specific setting data.

One or more automation components may be selected and the parameter data of those automation components may then be determined. During archive creation or a data backup, each selected component may appear a progress bar. When all automation components have finished their actions, the status of each automation component may be displayed. If all automation components have stored their parameter data without errors, the output data is created. If there are errors, even of a single automation component, the output data may not be saved. Optionally an error log may be displayed. In case the output data 1 is in the form of a file, e.g., on the automation system MT, such as the machine tool, the folder or file path may be preset or may be changed as desired.

In order to create the output data 1 a user may select a corresponding option, e.g., using a virtual button, in the operating menu of the automation system MT such as the machine tool. After selecting the virtual button and/or before selecting the button, the automation components of which the parameter data shall be retrieved may be selected. Additionally, a user may confirm the selection(s) made by further user input and the output data may be created.

Furthermore, one or more measurements, e.g., reference measurements, may be initiated and/or started and/or carried out in order to determine and/or update the parameter data 2. For example, the coordinate system of an axis of the machine tool MT may be synchronized with the coordinate system of the machine tool. The axis is traversed to the machine zero and then the actual position of the axis is set to zero. If the machine tool MT zero cannot be directly approached as a result of the machine design, then a reference point is defined in the traversing range of the axis, which is then used to synchronize the axis. Its position with reference to the machine tool zero must be known. When referencing, the actual machine axis position is set to this value. When referencing, axes can be synchronized with any one of the following measuring systems and referencing types: Incremental rotary measuring system with at least one zero mark, Incremental linear measuring system, Rotary measuring system with distancecoded reference marks, - Linear measuring system with distancecoded reference marks, - Absolute rotary measuring system, - Absolute linear measuring system. The referencing methods may comprise any one of the following: - Referencing with incremental measuring systems with proximity switch and one-edge and two-edge detection, - Referencing with incremental measuring systems with replacement of homing cam with proximity switch, - Referencing with incremental measuring systems with proximity switch with configured approach velocity for spindle applications, - Referencing with measuring systems with distancecoded reference marks by overtravelling 2 or 4 zero marks, - Referencing of passive measuring systems using measuring system adjustment, - Referencing in follow-up mode, - Referencing with cam switch at the drive. For channel-specific referencing, all axes of the channel are referenced in the parameterized sequence when reference point approach is initiated. As soon as a measurement has been successfully completed, e.g., for all machine axes involved, this is acknowledged. As a result, the machine tool zero is updated and may be retrieved as part of the parameter data.

In general, a measurement may serve to improve the accuracy of the digital twin DT of the automation system MT. For example, backlash may occur within and/or outside the position control loop. Furthermore, when traversing a circular path in a machine tool, contour errors occur primarily due to the reversal error and friction. During motion along straight lines, a contour error arises due to a reversal error outside the position control loop, e.g., due to a tilting milling spindle. This causes a parallel offset between the actual and the set contour. The shallower the gradient of the straight line, the larger the offset. Accordingly, the parameter data may comprise data entries that reflect, e.g., a friction compensation, a backlash compensation or the like.

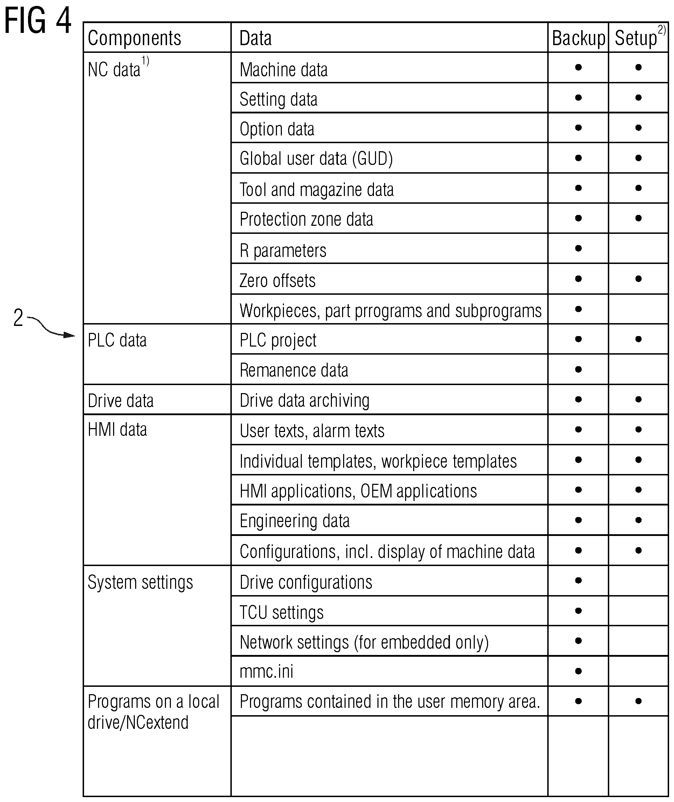

Figure 4 shows parameter data 2 comprising settings and a data backup, respectively. The automation components may each comprise parameter data 2 that may be retrieved from that respective component. Exemplary parameter data 2 of the numerical control, NC, may comprise one or more of the following: machine data, setting data, option data, global user, tool and magazine data, protection zone data, R parameters, zero offsets, workpieces, part programs and subprograms. Exemplary parameter data 2 of the PLC may comprise a PLC project and/or remanence data. Exemplary parameter data 2 of the drive component may comprise data relating to drive torque, encoder values, setpoint speed, etc. Exemplary parameter data of the HMI component 2 may comprise one or more of the following: user texts, alarm texts, individual templates, workpiece templates, HMI applications, OEM applications, engineering data, configurations, including display of machine data. Exemplary parameter data 2 denoted as system settings, e.g., of the machine tool, of an automation component may comprise one or more of the following: drive configurations, TCU settings, network settings and mmc.ini-files. Exemplary parameter data 2 of one or more programs on a local drive or an so-called NCextend drive may comprise one or more programs contained, e.g., in a user memory area.

The parameter data 2 may be stored as binary data, and preferably cannot be modified.

Subsequently a software component of the automation system MT, preferably of an automation component thereof, e.g., of the machine tool, may collect the parameter data 2 and create the output data 1, e.g., by combining the parameter data in a (single) output data file.

On the one hand, parameter data 2 may be used to save a specific automation system or component status and to be able to restore (backup) and on the other hand to set up a series of automation systems or components with the same parameter data (setup). In SINUMERIK ONE, the DSF format (Data Storage Folder) supports these two archive types. The CNC, PLC, HMI, system settings and drives components can be configured separately or stored together in separate files and read in again from there. The selection may be combined at will. The files can be used independently and be read in again with the greatest possible flexibility.

The parameter data 2, e.g., the one or more backups, can be used to parameterize the components of a virtual machine tool, i.e., a digital twin DT of the automation system MT. In addition to the necessity of extracting and storing up the individual parameter data for parameterization from the real automation system, another challenge for the user is to modify the parameter data if necessary so that the associated virtual, digital twin component can receive the data. For example, in the early days there was a problem for the VNCK that individual parameter data had to be modified or removed in order to parameterize the associated virtual simulation component, i.e. the digital twin component.

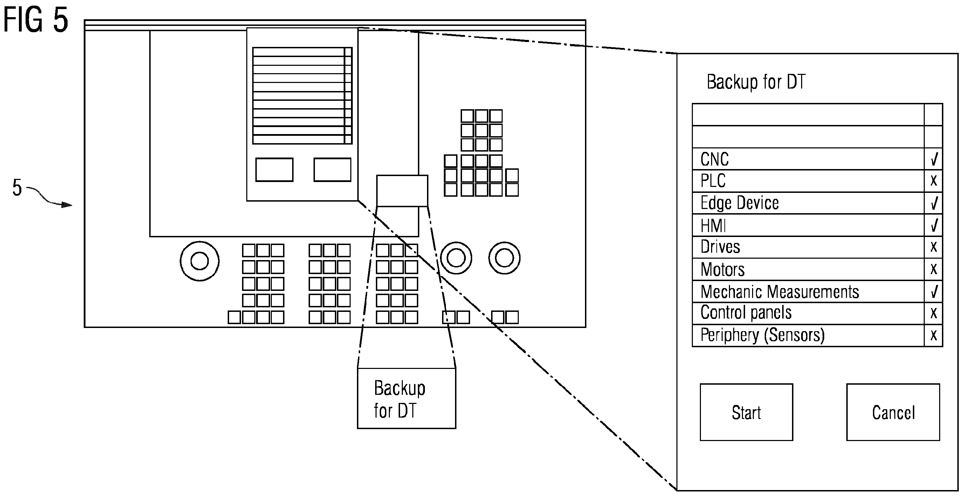

Figure 5 shows a user interface 5 on an HMI (Human-Machine Interface) control display of a machine tool MT comprising a control element in the form of virtual button for creating output data 1.

As described herein, the digital twin component of each automation component, such as the drive component, serves for simulating one or more functions of the respective component. This serves the purpose of making the drive component's functions testable, e.g., in interaction between the PLC user program and the drive component. A direct data exchange between real drive components and the simulated drive components may not be possible.

According to an aspect, the user is enabled to easily retrieve the parameter data for the DT of one or more automation components from the real automation component, e.g., a device, of the real automation system. The retrieved parameter data 2 can be imported directly into the DT of this automation component 11-18 without further modification.

To that end, a user may be prompted a virtual button on a user interface of an HMI, e.g., a (touch) display, in order to save the current parameter data of the machine tool MT. A possible design with configuration option is shown in Figure 5. Here, a complete set of parameter data or only the parameter data of individual automation components is possible.

If the recording of the parameter data 2 is selected by a user input, the parameter data 2 is written in a common output file. The output data 1 may contain information about the topology as well as the parameter data 2 of the automation components 11-18, e.g., according to Figure 3. This makes the output data 1 a complete picture of the conditions on the real automation system, e.g., the machine tool, and can be used for parameterizing the DT. The output data 1 and/or parameter data 2 that are suitable for directly operating the different levels of detail of the DT, e.g. different details of the drive models (e.g. DriveSim Basic or DriveSim Advanced) may also be generated. DriveSim Basic, for example, provides easy-to-use models for PROFIdrive-enabled SINAMICS drives, or drive components in general, that allows the creation of a digital twin (component) of the drive component. This DT allows verification and validation of the communication between the drive component and the PLC already in the planning phase. Furthermore, this DT enables ensuring that the drive component and motor(s) selected fit a specific application, e.g., at the design and planning stage.

For the characterization of the mechanics (static/dynamic) of the automation system MT, in addition to the mere retrieval of stored parameter data, a measurement run can be carried out to determine friction, frequency response, backlash, etc. Here, for example, autoservo tuning (AST) may be invoked. Auto Servo Tuning automates the process of adapting parameters to the control equipment, which controls the axes of a CNC machine tool. The parameters are adapted according to the frequency response measurement of the machine tool dynamics. One of the benefits of Auto Servo Tuning AST is that it facilitates the measuring process. The axis control loops are individually optimized according to the target parameters selected by the user for an adaptive strategy. In a second step, the control loop parameter settings are adjusted for axes that are identified as being involved in an interpolation path, with the result that the correct dynamic response is obtained for all axes. This adaptation ensures coordinated movement of all the axes along the interpolation path.

The creation of the output data 1 is not only possible via the HMI 18 of the machine tool, but can alternatively also be carried out on another networked component. The creation of the output data 1, e.g., in the form of a data backup, may take place and/or may be initiated by a device communicatively coupled from the automation system, such as the machine tool, via any interface (USB, network, service PC, etc.). Alternatively, the automation system may comprise, instead of a machine tool, one or more machines controlled by a CU320, a PLC or a motion control system. Hence, the automation system may comprise networked machines as well as in further a (completely networked) production. In that case, the parameter data 2 and/or topological information may be stored by and/or retrieved from each automation component accessible in the network connecting the automation components of the automation system. It should be understood that, the parameter data 2 may also relate to one or more software components of the automation system MT to which no dedicated hardware is assigned (such as VNCK of a machine tool) for which also a DT is required and thus may be parameterized.

The embodiments described herein provide a number of advantageous and benefits such as the creation of a parameter data and/or output data for a DT by the real automation system itself. Furthermore, direct reading of the output data into the DT is possible without modification of the output data. The automation components present in the networked automation system may be taken into account in the parameter data and/or output data. The characteristics of the mechanics are included as part of the parameter data (backup) as part of a reference measurement, e.g., a so-called measurement run. The user only has to press one button to create the parameter data (backup). The user has a choice regarding the automation components that should be part of the parameter (data backup). Parameter data may be determined that are suitable for directly parameterizing and thus operating the different levels of detail of the DT, e.g. different detailing of the drive models (e.g. DriveSim Basic or DriveSim Advanced). Triggering and retrieval of parameter data (backup) is possible on any suitable automation component of the networked automation system. The embodiments described herein may not only be used for networked automation systems, such as CNC machines, but also in stand-alone individual drive components, i.e., for non-networked machines.

Still further advantages are the creation of a parameter data (backup) for the DT is made at the real system itself. Furthermore, the output data file generated as part of this data backup can be loaded directly into a DT, i.e. directly read by the digital twin. All components present in the networked automation solution may be taken into account during data backup. The characteristic of the mechanics is part of the parameter data (backup). The characteristics of the mechanics are measured during a measurement run after the start of the data backup ("one-click"). The user only has to press one button to create the parameter data (backup). The user can select individual components and start a data backup for them. A parameter data (backup) may contain parameter sets for different levels of detail of the DT.(e.g. DriveSim Basic or DriveSim Advanced). A user can start the parameter data backup on any suitable automation component of the automation system, e.g., a networked manufacturing system.

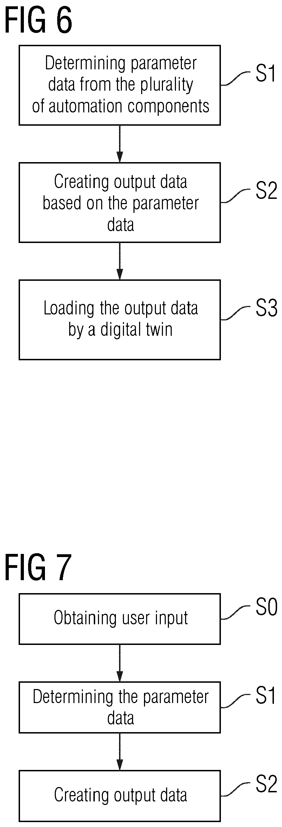

Further embodiments are described in connection with Figures 6 to 17.

In Figure 6 exemplary method steps are shown. In a first step S1, parameter data from a plurality of automation components of an automation system is determined, e.g., by an automation component from the plurality of automation components. The parameter data may serve for parameterizing the digital twin of the automation system. In a step S2, output data is created based on the parameter data, e.g., by the automation component. The output data may comprise the parameter data. Additionally, the output data may comprise metadata relating to the date and/or user initiating the creation of the output data. The output data is loadable by the digital twin of the automation system. Hence, in a step S3, the output data is loaded by the digital twin of the automation system. The parameter data serve for parameterizing the digital twin of the automation system.

As described in the above, wherein the parameter data comprises settings, preferably a data backup, of the plurality of automation components, and/or the parameter data comprises topological information about the plurality of automation components within the automation system.

In Figure 7 exemplary method steps are shown. In a step S0 user input is obtained. The user input thus initiates the step S1 of determining the parameter data. The user input preferably is a single user input. The user input may be entered or input by user via a user interface for operating the automation system. Subsequently, in a step S2, as in the above, the output data is created.

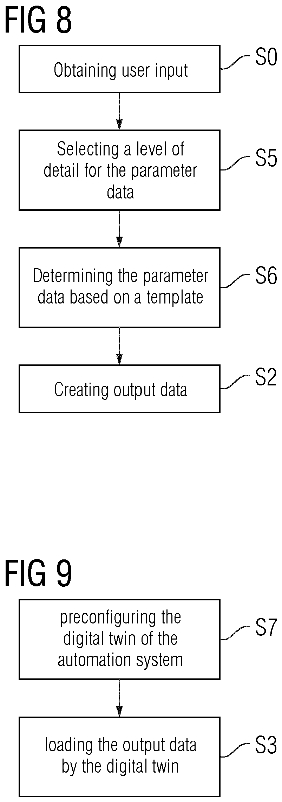

Turning to Figure 8, further exemplary method steps are shown. In a step S0, as previously described, user input may be obtained. In a step S5 a level of detail for the parameter data is selected, based on the user input. Again, the user input may be entered via a user interface for operating the automation system. The level of detail relates to the parameter data, e.g., in order to match the level of detail of the digital twin of the automation system. As explained earlier, a digital twin of an automation component may implement specific functionality subsets and/or the minimum required parameters of the automation component, e.g., converter control. The DT of the automation component is, for example in the case of SINAMICS DriveSim Basic, available as a standardized FMU model (Functional Mockup Unit) and is compatible with many standard time-based simulation programs (such as SIMIT, Simcenter Amesim, NX Motion or Matlab Simulink).

As the case may be, in order to model and simulate these properties a certain amount and/or specific parameters may be necessary. Hence, the level of detail may thus be matched between the parameter data necessary and required for the DT to be executed. Thus, in a step S6, the parameter data may be determined based on a template, e.g., by selecting the template via a user interface. The template may serve for selection of parameter data for parameterizing the digital twin of the automation system. Thus, the level of detail may be determined based on the template selected or vice versa. The template may act as a filter for selecting individual parameter data from the overall parameter data of an automation component. Finally, as before, in a step S2 the output data may be created based on the parameter data obtained as just described.

Turning to Figure 9, in a step S7 the digital twin of the automation system may be preconfigured. That is to say, the DT is setup with default (factory) settings. In that state the DT of the automation component is capable of representing different automation components, i.e., devices. It may therefore be necessary to adapt the DT to the automation system. To that end, in a step S3 the output data may be loaded by the digital twin. Thus, the parameterization of the DT may be initialized and/or updated. Hitherto the output data may be transmitted (from the automation system) to the digital twin, which is, e.g., located on a computing platform, which preferably comprises one or more processors and a memory.

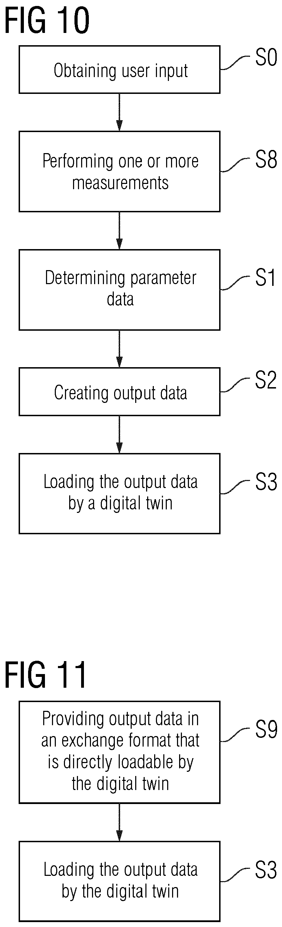

Further exemplary method steps are shown in Figure 10. As before user input may be obtained in a step S0. The user input may trigger or initiate the performance of one or more measurements in a step S8. Thus, the one or more measurements are initiated by the user input via the user interface. The measurements may be performed by the automation system, e.g., a reference measurement of an axis and/or spindle may be performed. Subsequently, the parameter data may be determined or updated in a step S1. The one or more measurements may serve for determining one or more mechanical characteristics of the automation system, preferably a resonance, friction and/or backlash of at least one automation component, such as said axis or spindle. In the following the output data may be created (which may comprise the (updated) parameter data) in a step S2, as described herein, and the output data may then be loaded by a digital twin of the automation system, also as described herein.

It should be understood that the step of determining parameter data and/or the step of creating output data is performed by a automation component from the plurality of automation components or a device communicatively coupled to the automation component.

As shown in Figure 11, the output data may be provided, by the automation system, in an exchange format that is directly loadable by the digital twin of the automation system in a step S9. In a subsequent step S3, as described herein, the output data is loaded by the digital twin, and the digital twin is parameterized based on the parameter data.

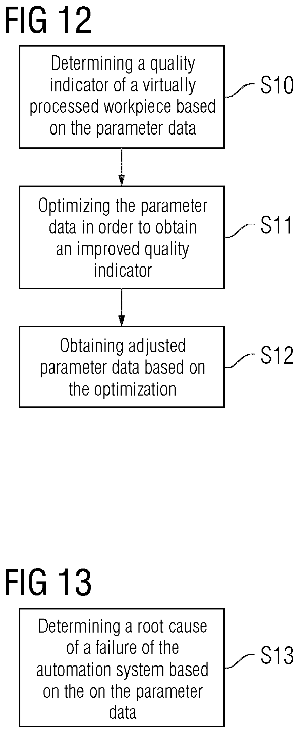

Turning to Figure 12, the digital twin may determine a quality indicator of a virtually processed workpiece based on the parameter data in a step S10. In a step S11, the digital twin may optimize the parameter data in order to obtain an improved quality indicator. In a step S12, the digital twin may obtain the adjusted parameter data based on the optimization. As described herein, the adjusted parameter data may be retransmitted to the automation system in order to be applied there, i.e., loaded by the automation system and/or its automation components.

Turning to Figure 13, the digital twin may determine a root cause of a failure of the automation system based on the on the parameter data in a step S13. As the case may be, a failure may occur in the automation system. Based on the parameter data the digital twin may be executed and, e.g., by way of a variation of parameters, a root cause of the failure may be determined. To that end, the parameter data may be varied and once an operating mode is found that does not produce the failure, a root cause can be assigned, e.g., based on the specific parameter that made the failure disappear upon its variation.

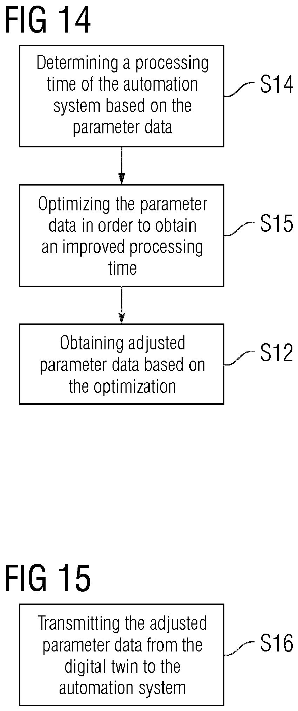

Now turning to Figure 14, the digital twin may determine a processing time of the automation system based on the parameter data in a step S14. The processing time preferably being a machining time of a workpiece by a machine tool. In a step S15, the digital twin may optimize the parameter data in order to obtain an improved processing time. In a subsequent step S12 the digital twin may obtain adjusted parameter data based on the optimization.

As shown in Figure 15, the adjusted parameter data is transmitted from the digital twin to the automation system in a step S16. At the automation system the adjusted parameter data may be loaded by the automation system and/or the plurality of components in order to apply the adjusted a parameter settings. It should be understood that the step S16 may be combined for example with any one of the exemplary methods steps as shown in Figures 12, 13, and/or 14.

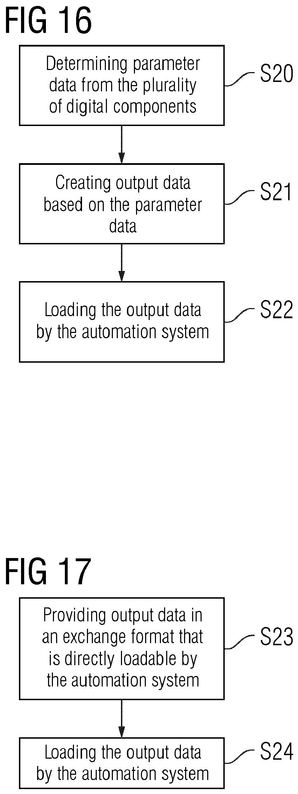

As shown in Figure 16, exemplary method steps of a method of providing output data, preferably in an output file, for parameterizing an automation system, preferably a machine tool, based on a digital twin of the automation system, the automation system comprising a plurality of automation components, and the digital twin digitally representing the automation system, and the digital twin comprising a plurality of digital twin components, wherein each digital twin component is digitally representing an automation component of the automation system, is shown. In a step S20, a digital twin component from the plurality of digital twin components may determine parameter data from the plurality of digital twin components, preferably the parameter data serve for parameterizing the automation system. In a step S21, the digital twin component may create output data based on the parameter data. In a subsequent step S22, the output data is loaded by the automation system.

For example, the output data created by the digital twin (component), may comprise the adjusted parameter data as described in Figures 12, 13, and/or 14.

Similar to the embodiments as already described herein, the step of determining the parameter data may be initiated by a (single) user input via a user interface for operating the digital twin (component).

Turning to Figure 17, in a step S23, the digital twin component may provide the output data in an exchange format. In a step S24, the output data is directly loaded by the automation system. By loading the output data, the automation system may become parameterized based on the parameter data.

Thereby a seamless parameterization of the automation system and/or the digital twin thereof is achieved.

Further embodiments may comprise an automation system MT, preferably a machine tool, comprising one or more processors and a memory operative to perform the method steps as described herein, in particular according to one or more of the exemplary embodiments in Figures 6 to 17.

Further embodiments may comprise a computing platform, preferably comprising one or more processors and a memory, operative to perform the method steps as described herein, in particular according to one or more of the exemplary embodiments in Figures 6 to 17.

Further embodiments may comprise a system comprising an automation system MT as described herein and a computing platform as described herein, in particular according to one or more of the exemplary embodiments in Figures 6 to 17.

Further embodiments may comprise a computer program, e.g., on a non-transitory storage medium, comprising program code, that when executed performs the method steps as described herein, in particular according to one or more of the exemplary embodiments in Figures 6 to 17.

## Claims

1. A method of providing output data (1), preferably in an output file, for parameterizing a digital twin (DT) of an automation system (MT), preferably a machine tool, the automation system (MT) comprising a plurality of automation components (11-18),
wherein the digital twin (DT) is a digital representation of the automation system (MT), the method comprising the steps of:
determining, by an automation component (17) from the plurality of automation components (11-18), parameter data (2) from the plurality of automation components (11-18), wherein the parameter data (2) serve for parameterizing the digital twin (DT) of the automation system (MT),
creating, by the automation component (17), output data (1) based on the parameter data (2), wherein the output data (1) is loadable by the digital twin (DT) of the automation system (MT) .

2. The method according to the preceding claim,
wherein the parameter data (2) comprises settings, preferably a data backup, of the plurality of automation components (11-18), and/or
the parameter data (2) comprises topological information about the plurality of automation components (11-18) within the automation system (MT).

3. The method according to any one of the preceding claims, wherein the step of determining the parameter data (2) is initiated by a user input, preferably a single user input, via a user interface (5) for operating the automation system (MT) .

4. The method according to any one of the preceding claims, selecting, via a user interface (5) for operating the automation system (MT), a level of detail for the parameter data (2), e.g., in order to match the level of detail of the digital twin (DT) of the automation system (MT).

5. The method according to any one of the preceding claims, determining the parameter data (2) based on a template, e.g., by selecting the template via a user interface (5), for a selection of parameter data (2) for parameterizing the digital twin (DT) of the automation system (MT).

6. The method according to any one of the preceding claims, preconfiguring the digital twin (DT) of the automation system (MT),
transmitting the output data (1) to the digital twin (DT), e.g., located on a computing platform,
loading the output data (1) by the digital twin (DT), e.g., for initializing and/or updating a parameterization of the digital twin (DT) of the automation system (MT).

7. The method according to any one of the preceding claims, performing, e.g., initiated by the user input via the user interface, by the automation system (MT) one or more measurements, e.g., one or more reference measurements, for example of an axis and/or spindle, for determining and/or updating the parameter data (2), wherein the one or more measurements serve for determining one or more mechanical characteristics of the automation system (MT), preferably a resonance, friction and/or backlash of at least one automation component (11-18).

8. The method according to any one of the preceding claims, wherein the step of determining parameter data (2) and/or the step of creating output data (1) is performed by the automation component (17) from the plurality of automation components (11-18) or a device communicatively coupled to the automation component (17).

9. The method according to any one of the preceding claims, providing, by the automation system (MT), the output data (1) in an exchange format that is directly loadable by the digital twin (DT) of the automation system (MT), and wherein by loading the output data (1), the digital twin (DT) is parameterized based on the parameter data (2).

10. The method according to any one of the preceding claims, determining, by the digital twin (DT), a quality indicator of a virtually processed workpiece based on the parameter data (2) ,
optimizing, by the digital twin (DT), the parameter data (2) in order to obtain an improved quality indicator, and obtaining, by the digital twin (DT), adjusted parameter data based on the optimization.

11. The method according to any one of the preceding claims, determining, by the digital twin (DT), a root cause of a failure of the automation system (MT) based on the on the parameter data (2).

12. The method according to any one of the preceding claims, determining, by the digital twin (DT), a processing time of the automation system (MT) based on the parameter data, preferably a machining time of a workpiece by a machine tool, optimizing, by the digital twin (DT), the parameter data (2) in order to obtain an improved processing time, and obtaining, by the digital twin (DT), adjusted parameter data based on the optimization.

13. The method according to any one of the preceding claims 10 to 12,
transmitting the adjusted parameter data from the digital twin (DT) to the automation system (MT).

14. A method of providing output data (1), preferably in an output file, for parameterizing an automation system (MT), preferably a machine tool, based on a digital twin (DT) of the automation system (MT), the automation system (MT) comprising a plurality of automation components (11-18), and the digital twin (DT) digitally representing the automation system (MT), and the digital twin (DT) comprising a plurality of digital twin components, wherein each digital twin component is digitally representing an automation component (11-18) of the automation system (MT), the method comprising the steps of:
determining, by a digital twin component from the plurality of digital components, parameter data (2) from the plurality of digital components, wherein the parameter data (2) serve for parameterizing the automation system (MT),
creating, by the digital twin component, output data (1) based on the parameter data (2), wherein the output data (1) is loadable by the automation system (MT).

15. The method according to the preceding claim,
wherein the step of determining the parameter data (2) is initiated by a (single) user input via a user interface for operating the digital twin (DT).

16. The method according to the preceding claim,
providing, by the digital twin component, the output data (1) in an exchange format that is directly loadable by the automation system (MT), and wherein by loading the output data (2), the automation system (MT) is parameterized based on the parameter data (2).
